# FASCICULE DE BREVET EUROPEEN

(11) **EP 3 963 228 B1**
(45) Date de publication et mention de la délivrance du brevet: **07.08.2024**
(21) Numéro de dépôt: 20740379.1
(22) Date de dépôt: 03.06.2020
(51) Int. Cl.: F16D 51/22, F16D 51/24, F16D 65/22, B60T 13/74, F16D 121/04, F16D 121/24, F16D 125/40, F16D 125/48

(54) **FREIN ELECTROMECANIQUE COMPACT**
KOMPAKTE ELEKTROMECHANISCHE BREMSE
COMPACT ELECTROMECHANICAL BRAKE

(30) Priorité: 07.06.2019 FR 1906068
(43) Date de publication de la demande: 09.03.2022
(73) Titulaire: Hitachi Astemo France, 93700 Drancy (FR)
(72) Inventeur: WITTE, Lennart, 67000 Strasbourg (FR); DACLAT, Julien, 77127 Lieusaint (FR)
(74) Mandataire: Brevalex
(86) Numéro de dépôt international: PCT/FR2020/050950
(87) Numéro de publication internationale: WO 2020/245543

(56) Documents cités:
- US-A1- 2011 308 898
- US-A1- 2014 345 989

## Description

### DOMAINE TECHNIQUE ET ÉTAT DE LA TECHNIQUE ANTÉRIEURE

La présente invention se rapporte à un frein pour véhicule automobile à actionnement au moins en partie électrique offrant une plus grande compacité.

Dans la plupart des automobiles actuelles, le frein de service est assuré par des freins à disques et/ou des freins à tambour.

Ils assurent la fonction de freinage de service, visant à ralentir, voire arrêter, le véhicule automobile. La fonction de frein de parking ou de stationnement visant à immobiliser un véhicule à l'arrêt et la fonction de frein de secours sont généralement obtenues avec le système assurant le frein de parking.

L'application du frein de parking peut être obtenue en tirant sur un levier disposé dans l'habitacle qui est relié à un mécanisme situé dans un frein à tambour ou un frein à disque, par l'intermédiaire d'un câble de frein. Le mécanisme tend à écarter les segments de freinage des freins à tambour pour les appliquer contre les tambours. Dans le cas d'un frein à disque, les plaquettes sont serrées sur le disque de frein.

Pour améliorer le confort du conducteur et la sécurité d'application du freinage de parking, l'industrie automobile a développé un frein de parking électrique.

Par exemple, un actionneur muni d'un moteur électrique est disposé au moins sur chaque frein arrière, et provoque le serrage des freins.

Le conducteur appuie par exemple sur un bouton disposé sur le tableau de bord pour activer le freinage de parking électrique.

Les systèmes de frein de parking électrique comportent des moteurs électriques à courant continu, la mise en oeuvre de tels moteurs étant recommandée par exemple par l'association allemande de l'industrie automobile dans ses « VDA Recommendation ».

Dans le cas d'un frein à disque, c'est en général le piston qui est déplacé par l'actionneur et qui vient appliquer les plaquettes de frein contre le disque de frein. Dans le cas d'un frein à tambour, l'actionneur est par exemple disposé entre les segments de frein et sert de point fixe lors de l'application d'un freinage de service par l'intermédiaire d'un cylindre de roue. L'actionneur est par exemple du type vis-écrou et écarte les segments.

Aucun capteur n'est mis en oeuvre dans l'actionneur pour connaître la position relative des éléments mécaniques du frein. La mesure du courant et/ou la tension aux bornes du moteur électrique permet de connaître l'état du frein serré. En effet, une augmentation de courant et/ou de la tension correspond à un état serré du frein de parking.

Par ailleurs, il est actuellement souhaité qu'aucun des composants n'entre en contact avec une butée mécanique lors de la course de desserrage pour éviter de détériorer le frein, par exemple il est souhaité que le piston ne vienne pas en butée contre le fond de l'étrier.

La position relative des éléments mécaniques du frein, lors de l'application d'un freinage de parking est actuellement obtenue au moyen d'une estimation en connaissant la position serrée donnée par la valeur du courant et/ou de la tension aux bornes du moteur et, par exemple, en comptant le nombre de tours de l'écrou de l'actionneur. Or l'estimation de la position relative des éléments mécaniques du frein à la fin de la phase de desserrage ou de relâchement du frein n'est pas très précise. Afin de tenir compte de cette imprécision et éviter la mise en butée des composants du frein, une marge d'erreur est prise autour de la position estimée. En outre, une marge supplémentaire de sécurité est prise pour tenir compte des imprécisions dimensionnelles inhérentes à la fabrication du frein. Il en résulte donc que le dimensionnement du frein intègre ces marges d'erreur et de sécurité. Le frein présente alors un certain encombrement. En outre, du fait de l'imprécision dans la position des composants à l'état desserré, la position de départ pour le freinage suivant n'est pas connue. De plus, la course à parcourir par le ou les composants est allongée ce qui augmente le temps d'application du frein, et également la durée pendant laquelle l'actionneur émet un bruit.

Le document US2014/0345989 décrit un frein à tambour comportant un actionneur électrique pour le frein de parking mettant en oeuvre un levier. Il présente alors un encombrement important.

### EXPOSÉ DE L'INVENTION

C'est par conséquent un but de la présente invention d'offrir un frein pour véhicule automobile à actionnement au moins en partie électrique, compact et offrant une plus grande précision de commande.

Le but précédemment énoncé est atteint par un frein pour véhicule automobile comportant au moins un actionneur électrique destiné à déplacer un ou plusieurs éléments du frein de sorte à appliquer une force de freinage à un élément solidaire en rotation d'une roue, ledit actionneur comportant au moins une butée mécanique, ledit actionneur étant commandé en phase de relâchement du frein de sorte qu'au moins l'un des éléments mobiles de l'actionneur vienne en appui contre la butée. La position de la butée étant connue au jeu de fabrication près, la position dudit au moins un élément est connue avec une précision augmentée. Il est alors possible de dimensionner le frein au plus juste, i.e. sans tenir compte d'une marge due à l'imprécision dans l'estimation de la position reculée. La course à parcourir pour serrer le frein est alors réduite, et le temps d'application du frein est plus court. La durée pendant laquelle l'actionneur émet un bruit est de fait également réduite, et la durée de la gêne occasionnée au conducteur et aux passagers du véhicule également.

En d'autres termes, on réalise un actionneur dans lequel on fixe volontairement la position d'au moins un élément mobile dans un état de repos du frein, de sorte à réduire les incertitudes sur sa position, et ainsi dispose d'une plus grande liberté dans le choix des dimensions de l'actionneur, par exemple de sorte à le rendre plus compact.

Dans un exemple, le frein comporte un actionneur électrique pour appliquer le frein de parking et un actionneur hydraulique assurant la fonction de frein de service.

Dans un autre exemple, le frein est entièrement à actionnement électrique, l'actionneur assurant à la fois le freinage de parking et le freinage de service.

Dans un exemple, l'actionneur est de type vis-écrou et les moyens de butée comportent une dent sur le filetage formant une butée pour l'écrou. Dans un autre exemple, l'actionneur comporte des moyens déformables élastiquement capables de stocker de l'énergie, les moyens de butée formant une butée pour une partie au moins des moyens déformables élastiquement.

La présente invention a alors pour objet un frein électromécanique d'après la revendication 1.

De préférence, le frein électromécanique comporte une unité de commande comportant des moyens de commande de l'alimentation du moteur électrique et des moyens pour mesurer la consommation électrique du moteur électrique, lesdits moyens de commande étant configurés pour arrêter l'alimentation du moteur électrique, lorsque la consommation électrique dépasse une valeur donnée.

Avantageusement, l'actionneur est configuré pour appliquer au moins un freinage de parking et dans lequel le frein comporte un deuxième actionneur pour appliquer un freinage de service.

Dans un exemple avantageux, l'actionneur comporte un ensemble vis-écrou, ledit écrou formant ledit élément mobile, ladite vis comportant une tête et un tige munie d'un pas de vis, ladite tête formant un piston en appui contre un des segments de frein, et les moyens de butée comportent une dent en saillie dudit filetage disposée de sorte à venir en contact avec l'écrou lorsqu'il prend une position au-delà de la position de relâchement.

Par exemple, l'actionneur peut comporter un corps, des moyens déformables élastiquement et aptes à stocker de l'énergie lors de l'application de l'activation de l'actionneur, au moins une partie desdits moyens déformables formant l'élément mobile, et le corps peut comporter les moyens de butée.

La présente invention a également pour objet un procédé de fabrication d'un frein électromécanique selon la présente invention, comportant :
a) détermination de la position de le au moins élément mobile au-delà de laquelle le frein est relâchée,
b) détermination de la position des moyens de butée par rapport à ladite position de relâchement de sorte que les moyens de butée soient distants de la position de relâchement d'au moins un jeu de fabrication associé audit procédé,
c) réalisation des moyens de butée dans l'actionneur à la position déterminée à l'étape b),
d) assemblage de l'actionneur et de l'organe de friction.

### BRÈVE DESCRIPTION DES DESSINS

La présente invention sera mieux comprise sur la base de la description qui va suivre et des dessins en annexe sur lesquels:
La figure 1 est une représentation schématique du déplacement estimé d'un élément mobile d'un actionneur d'un frein électromécanique de l'état de la technique.
La figure2 est une représentation schématique du déplacement estimé d'un élément mobile d'un actionneur d'un frein électromécanique selon l'invention.
La figure 3 est une vue en perspective d'un exemple de frein à tambour à frein de parking électrique selon l'invention.
La figure 4 est une vue en perspective d'un exemple d'actionneur pour frein à tambour selon l'invention, partiellement arrachée.
La figure 5 est une vue en coupe schématique d'un autre exemple d'actionneur pour un frein à tambour selon l'invention.

### EXPOSÉ DÉTAILLÉ DE MODES DE RÉALISATION PARTICULIERS

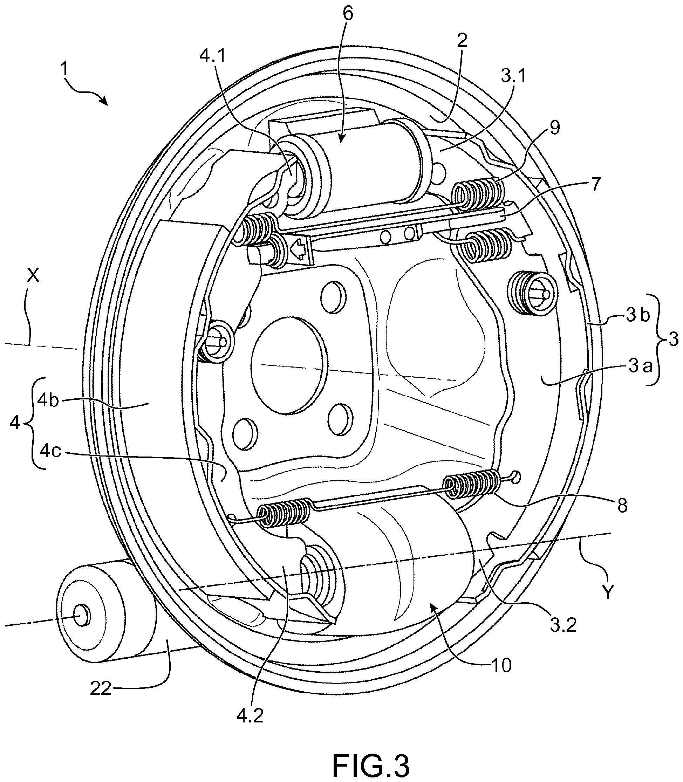

Sur la figure 3, on peut voir un frein à tambour 2 "bi-mode" dans un exemple de mode de réalisation de l'invention.

Le frein à tambour 1 comporte un tambour (non représenté) solidaire en mouvement de la roue (non représenté), un plateau 2 de révolution d'axe X équipé d'un premier et d'un second segment en arc de cercles 3 et 4 mobiles radialement pour pouvoir être pressés contre la face interne cylindrique d'un tambour non représenté.

Les segments 3 et 4 comportent chacun une âme 3a, 4a en tôle plane en forme de portion de couronne circulaire qui porte une garniture de freinage 3b, 4b, et sont montés diamétralement opposés avec leurs extrémités en appui à fois sur un cylindre de roue 6 hydraulique et sur un actionneur mécanique 10 portés par le plateau 2. Ces segments 3 et 4 sont en outre rappelés l'un vers l'autre par deux ressorts de rappel 8 et 9, et plaqués contre le plateau 2 chacun par un ressort dit latéral.

Une biellette de rattrapage d'usure 7 s'étend le long du cylindre de roue 6 en ayant une première extrémité en appui sur l'âme 3a du premier segment 3 et une seconde extrémité en appui sur l'âme 4a du second segment 4 lorsque le frein est au repos.

Le cylindre de roue 6 est destiné à être actionné lors d'une utilisation du frein à tambour 1 selon un premier mode de fonctionnement dit "simplex", qui assure un freinage progressif particulièrement adapté pour freiner le véhicule en service. Il comprend une chambre hydraulique fermée à ses extrémités par deux pistons qui s'écartent l'un de l'autre lorsque la pression hydraulique augmente et pousse les extrémités associées des segments 3 et 4.

L'actionneur mécanique 10 assure, quant à lui, le freinage de stationnement ou de parking et de secours en écartant les extrémités associées des segments pour assurer un blocage rapide et puissant des roues du véhicules selon un mode de fonctionnement dit "duo-servo", notamment quand le cylindre de roue 6 est inactif. Cet actionneur est entraîné par un moteur électrique 22. Dans l'exemple représenté, le cylindre de roue comporte deux pistons opposés, qui actionnent chacun l'un des segments 3, 4 en écartant l'une de l'autre leurs deux extrémités 3.1, 4.1 en vis-à-vis, c'est-à-dire celles situées d'un même côté de l'axe de rotation X, ici appelées "extrémités mobiles" et situées en haut de la figure 3. A son extrémité opposée 32, 4.2 dite extrémité de butée, chaque segment s'appuie sur le plateau 2 par un élément d'ancrage solidaire du plateau, et formant ainsi une butée pour ce segment. L'élément d'ancrage transmet au moins en partie le couple de freinage entre segments et plateau. L'élément d'ancrage des deux segments est réalisé par l'actionneur 10.

L'actionneur 10 s'étend le long d'un axe Y perpendiculaire à l'axe X du plateau et parallèle au plateau. Il comporte un boîtier 12 fixé sur plateau 2 du côté de la première face. Le boîtier comporte un logement formé par alésage traversant 13 s'étendant le long de l'axe Y et débouchant aux deux extrémités longitudinales du boîtier 12. Un ensemble d'entrainement est logé dans l'alésage 13.

L'ensemble d'entrainement est par exemple du type vis-écrou, tel que celui décrit dans la demande WO2015/101486. Il comporte deux éléments d'appui 16, 20 destinés à former un point fixe pour les extrémités 3.2, 4.2 des segments de freinage 3, 4 respectivement en freinage de service, et à appliquer un effort sur les extrémités 3.2, 4.2 en freinage de parking en étant déplacés vers l'extérieur du boîtier le long de l'axe Y.

Le frein à tambour comporte également un dispositif d'entraînement 22 de l'actionneur, fixé du côté sur l'autre face du plateau opposée à la face du côté de laquelle est monté l'actionneur 10.

Le dispositif d'entrainement est un moteur électrique qui est avantageusement associé ou non à un réducteur.

Un passage (non illustré) est pratiqué à travers le plateau 2 pour permettre la transmission de l'entraînement du dispositif d'entraînement à l'ensemble d'entrainement de l'actionneur 10.

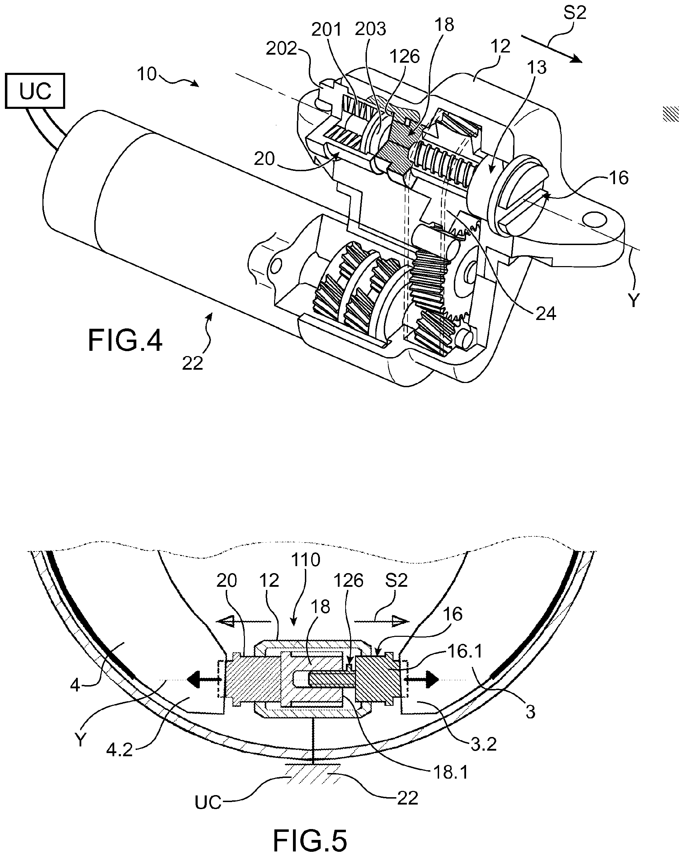

Sur la figure 4, on peut voir un exemple d'un actionneur 10 pour frein à tambour selon l'invention. Il comporte un premier élément fileté 16 et un deuxième élément 18 comportant un taraudage recevant le premier élément fileté 16, les premier et deuxième éléments interagissant entre eux pour former un système vis-écrou. Ce système vis-écrou produit le mouvement linéaire sous l'effet d'une rotation du deuxième élément 18 par rapport au premier élément 16. Il transforme le couple reçu par le deuxième élément 18 en deux forces axiales opposées sur chacun des éléments 16, 18 respectivement.

Le premier élément 16 forme un piston en appui contre le segment de frein 3 et un deuxième piston 20 est interposé entre le segment de frein 4 et le deuxième élément 18. Le deuxième élément 18 est destiné à être entraîné en rotation par une roue dentée 24 mise en rotation par le dispositif d'entrainement. Dans l'exemple représenté, le premier élément 18 est monté dans la roue dentée 24 et est solidarisé en rotation par rapport à elle au moyen de cannelures.

Dans ce mode de réalisation, l'angle de filetage de ce système vis-écrou est choisi pour que la transmission d'effort obtenue soit irréversible, en choisissant un angle de filetage qui est inférieur à l'angle de friction du couple de matériaux employé pour réaliser ces deux éléments.

Ce choix d'un système vis-écrou, combiné avec le choix d'un tel angle de filetage, produit une irréversibilité qui fournit la fonction de blocage en position de freinage de stationnement. C'est-à-dire qu'un effort reçu par les pistons 16, 20 depuis les segments 3, 4 est bloqué par le non-glissement entre les filetages des deux éléments du système vis-écrou. Il n'est ainsi pas transmis jusqu'à la motorisation, rendant ainsi inutile de bloquer le moteur ou de le maintenir en charge.

En outre comme cela est visible sur la figure 4, l'actionneur 10 comporte également un élément déformable élastiquement selon l'axe du mouvement d'actionnement, dit élément élastique, aussi appelé "spring pack" en anglais pour fournir la fonction de stabilisation des efforts dans la chaîne d'appui. Dans cet exemple de réalisation, cet élément élastique est réalisé par l'un des deux pistons, ici le deuxième piston 20. En fonction des efforts transmis sur la direction de déplacement de l'écarteur, cet élément élastique présente une raideur déterminée pour fournir une course permettant de maintenir ou rétablir un appui suffisant des segments contre le tambour dans différentes circonstances ou changements de situations.

En variante, le spring pack est disposé entre le deuxième piston 20 et le deuxième élément 18.

En particulier, cet élément élastique est ainsi susceptible d'emmagasiner, par compression dans l'ensemble d'actionnement lors d'une activation de l'actionneur alors que le dispositif est dans la première position de freinage, une quantité d'énergie mécanique suffisante pour maintenir ou amener le dispositif dans la deuxième position de freinage si l'appui du cylindre de roue 6 est interrompu après une activation de l'actionneur 10 sans nécessiter d'activer à nouveau l'actionneur.

Une telle situation se produit par exemple lorsque le conducteur arrête le véhicule et le maintient arrêté à l'aide du frein de service, puis enclenche le frein de stationnement avant de relâcher la commande du frein de service, par exemple lors d'un arrêt pour stationnement dans une pente. Cette réserve élastique permet de combler les courses qui sont nécessaires au passage d'une position de freinage à l'autre, par exemple du mode simplex au mode duo servo, tout en assurant une charge suffisante pour satisfaire aux besoins de l'immobilisation du véhicule.

La course de cet élément élastique permet aussi, au cours d'une variation de dimensions d'éléments 3, 4 du frein à tambour, et sans activation de l'actionneur 10:
- de maintenir l'effort d'appui des segments 3, 4 contre la piste de frottement en cas de variations dimensionnelles dans un sens, par exemple en cas de rétraction thermique des segments ou des éléments de la chaîne mécanique créant cet appui, tels que les pistons ou le mécanisme qui les écarte, ou par exemple en cas de dilatation thermique du tambour ; et
- de limiter l'augmentation des efforts dans le mécanisme en cas de variations dimensionnelles dans l'autre sens, pouvant être causée par exemple par une rétraction thermique du tambour lorsque celui-ci se refroidit à l'arrêt après avoir été échauffé en tant que frein de service au cours d'un trajet.

Cet élément élastique permet ainsi de limiter et le plus souvent d'éviter tout besoin de réactivation automatique du système en cours de stationnement, aussi appelé "re-clamping", qui peut être consommateur d'énergie et sujet à des dysfonctionnements pouvant être lourds de conséquences.

Dans les modes de réalisation où le mouvement de l'actionneur est obtenu par un mécanisme de type irréversible, l'élément élastique est situé en aval du mécanisme irréversible.

Dans l'exemple de la figure 4, l'élément élastique est ici réalisé par le deuxième piston 20 qui comprend une tête de piston 202 présentant vers l'arrière une jupe à l'intérieur de laquelle peut coulisser un fond de piston 203. La tête de piston 202 et le fond de piston 203 viennent en appui l'un contre l'autre par l'intermédiaire d'une structure élastique compressible 201, ici un empilement avantageusement précontraint de rondelles coniques en acier, dites rondelles "Belleville". L'ensemble est ici maintenu par un sertissage de l'extrémité de la jupe autour de l'arrière du fond de piston 203.

Selon l'invention, le frein à tambour comporte des moyens 26 formant butée pour au moins un des éléments mobiles de l'actionneur 10, lors de la phase de relâchement du frein de parking.

L'élément mobile présente une position de relâchement Pr à partir de laquelle, en phase de desserrage du frein, on est sûr d'avoir desserré le frein de parking. Les moyens 26 sont disposés dans l'actionneur à une position Pb au-delà de la position de relâchement Pr en phase de desserrage.

On désigne par « éléments mobiles de l'actionneur » les éléments de l'actionneur qui sont mis en mouvement pendant l'application du frein de parking et lors du relâchement de celui-ci.

Selon un premier exemple, les moyens de butée sont disposés entre le spring pack et le corps de l'actionneur 10.

Lorsque l'actionneur est activé pour relâcher le frein de parking, le deuxième élément 18 coulisse le long de l'axe Y de l'actionneur en direction du premier piston 16, le deuxième piston 20 se déplace dans le sens S2 sous l'action du segment 4 qui est ramené vers l'intérieur par le ressort de rappel 8. En outre, le spring pack se détend provoquant le déplacement du fond 203 de piston 20 dans le sens S2. L'actionneur est dans un état où le frein est relâché, le fond 203 du deuxième piston 20 est à la position Pr. Le fond 203 continue à se déplacer pour venir en appui contre une butée axiale et atteindre la position de repos Pb. La position Pb de la butée 26 est telle que le fond 203 vient en appui contre elle, lorsque le spring pack est complètement relâché. Dans l'exemple représenté, la butée 26 est un épaulement formé dans l'alésage 13 du boîtier 12 de l'actionneur. L'extrémité du deuxième élément 18 destinée à entrer en contact avec le deuxième piston 20 coulisse dans une portion de diamètre réduit de l'alésage 13.

La position Pb du fond 203 est alors toujours la même à chaque relâchement du frein de parking. Cette position est connue au jeu de fabrication près.

Par conséquent, à chaque début d'activation du frein de parking, la position du deuxième piston 20 est connue au jeu de fabrication près. Sa position, lors de l'activation de l'actionneur 10, peut alors être estimée relativement précisément en comptant le nombre de tours du deuxième élément 18 qui est connu à partir du nombre de tours du moteur et du rapport de réduction entre le moteur et le deuxième élément 18. L'incertitude d'estimation due à l'incertitude sur la position de l'un des éléments de l'actionneur à l'état repos est supprimée. La position Pb est en aval de la position Pr dans le sens de déplacement de l'élément mobile en phase de de desserrage du frein.

Dans un autre exemple de réalisation représenté sur la figure 5, l'actionneur 110 comporte des moyens de butée formés par une dent 126 sur le filetage du premier piston 16 contre laquelle l'extrémité longitudinale 18.1 du deuxième élément 18, orientée du côté du premier piston 16, vient en appui lorsque l'actionneur est en position relâchée. La dent 126 est représentée schématiquement sur la figure 5.

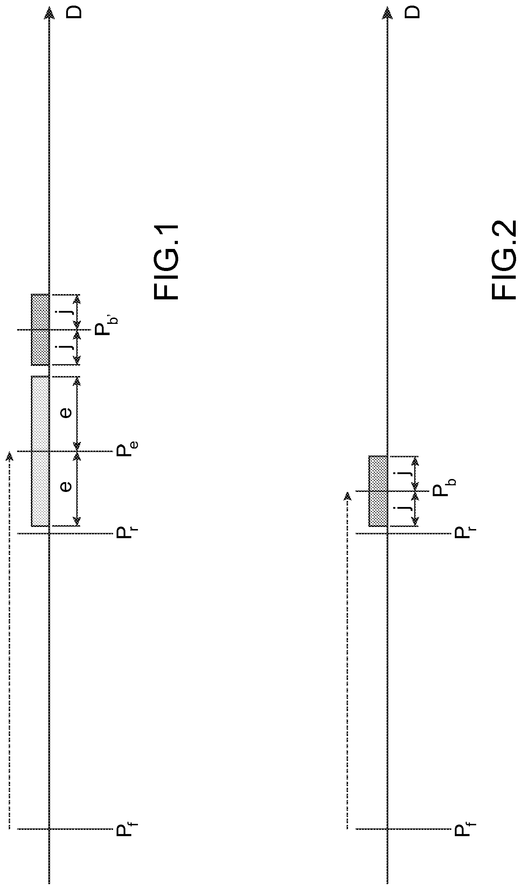

Le fonctionnement du frein selon l'invention va maintenant être décrit à partir de l'exemple de la figure 5 et avec la représentation schématique du déplacement D du deuxième élément 18 sur la figure 2.

Les positions sur la figure 2 sont les positions de l'extrémité longitudinale 18.1 du deuxième élément 18 destiné à venir en contact avec la dent 126.

Nous considérons que le frein de parking est appliqué (figure 5). Le premier élément à la position Ps. Les pistons 16 et 20 sont écartés l'un de l'autre et appliquent les segments de frein contre le tambour. L'extrémité longitudinale 18.1 du deuxième élément 18 est à la position Pf, lorsque le frein de parking est appliqué.

Le conducteur décide de désactiver le frein de parking, pour cela il commande l'activation de l'actionneur 10, par exemple en appuyant sur un bouton, le deuxième élément 18 est mis en rotation via le moteur électrique et la roue dentée, de sorte que les pistons 16 et 20 coulissent l'un vers l'autre. Le deuxième piston 16, en particulier sa tige filetée, coulisse dans le deuxième élément 18, la tête du piston 16.1 se rapprochant de l'extrémité longitudinale 18.1 du deuxième élément. Le deuxième élément 18 tourne jusqu'à ce que les pistons 16, 20 aient parcouru un course l'un vers l'autre considérée comme suffisante pour assurer le relâchement du frein de parking, l'extrémité longitudinale 18.1 du deuxième élément 18 a alors la position Pr. Le deuxième élément 18 est ensuite tourné jusqu'à ce que la dent 126 vienne en appui contre l'extrémité longitudinale 18.1 du deuxième élément, l'extrémité longitudinale 18.1 du deuxième élément 18 est à la position Pb. Une unité de commande UC mesure alors une augmentation du courant aux bornes du moteur, et commande l'arrêt de l'alimentation du moteur. L'actionneur est arrêté.

La position de la dent 126 est avantageusement choisie de sorte que le contact entre la dent et le deuxième élément 18 ait lieu juste après que le course de relâchement soit parcourue afin d'obtenir un frein très compact.

Ainsi, lors de la conception du frein, en particulier de l'actionneur, la dimension axiale de l'actionneur est choisie de sorte que le deuxième élément 18 puisse parcourir la distance entre Pr et Pb. La position Pb étant connue au jeu de fabrication près, on peut optimiser la longueur de l'actionneur et il n'est pas nécessaire de prévoir une marge supplémentaire pour tenir compte de l'incertitude de la position du deuxième élément en position relâchée. La distance entre Pb et Pr est au moins égale au jeu de fabrication. Sur la figure 2, cette distance est légèrement supérieure au jeu j.

Sur la figure 1, on peut voir le déplacement du deuxième élément 18 dans un actionneur de l'état de la technique. Une position de repos prise par le deuxième élément est une position estimée Pe, celle-ci est estimée avec une marge d'erreur e. Le dimensionnement de l'actionneur prend en compte la marge d'erreur e et le jeu de fabrication j pour la position Pb' de la butée. En considérant un actionneur du type de celui de la figure 5, la longueur de l'actionneur de l'état de la technique est au moins supérieure de 2e à celui de l'actionneur selon l'invention de la figure 5.

Grâce à l'invention, une réduction de 2 mm de la longueur de l'actionneur peut être obtenue.

En outre, en optimisant la course du premier élément, i.e. en la réduisant, l'application du frein de parking pendant la prochaine activation du frein de parking sera plus rapide, le premier élément ayant une distance plus courte à parcourir.

Selon un autre exemple de réalisation, une butée est prévue sur le corps de l'actionneur contre laquelle le premier élément 18 vient en appui en position de butée.

La présente invention s'applique également à un frein à disque électromécanique.

La présente invention s'applique aux freins à disque à étrier flottant et aux freins à disque à étrier fixe.

Dans les exemples décrits, le ou les éléments mobiles de l'actionneur se déplacent le long d'un axe et éventuellement en rotation autour de cet axe. Dans un autre exemple, l'actionneur au moins une pièce mobile uniquement en rotation par exemple de type came, la butée formant une butée angulaire. Les moyens de butée interrompent un mouvement uniquement de rotation.

Dans l'exemple de la figure 4, les moyens de butée forment une butée axiale pour le spring pack. Dans l'exemple de la figure 5, les moyens de butée forment une butée en rotation et interrompent un déplacement en translation. En variante encore, les moyens de butée forment une butée axiale pour un élément mobile à la fois en rotation et en translation.

Un exemple de procédé de réalisation du frein de la figure 5 va maintenant être décrit.

Tout d'abord, on détermine le déplacement minimal du ou des éléments mobiles de l'actionneur pour être sûr que les freins sont relâchées. A partir de ce déplacement minimal, on fixe la position que doit atteindre le ou les éléments mobiles en phase de relâchement, pour que le frein soit relâché. Cette position est la position Pr de la figure 2.

On détermine ensuite la position de la butée Pb par rapport à la position Pr en tenant compte du jeu de fabrication j. La distance minimale entre Pr et Pb est au moins égale à j.

On réalise les moyens de butée sur le corps de l'actionneur ou une autre pièce de l'actionneur, de sorte que la pièce mobile entre en contact avec la butée à la position Pb, i.e. Pr + j. Les différentes pièces de l'actionneur sont adaptées à ce déplacement, notamment le boîtier qui présente une plus grande compacité.

Dans le cas d'un élément mobile ayant un déplacement uniquement en rotation, le déplacement est un déplacement angulaire.

### REFERENCES

1 frein à tambour
2 plateau
3 premier segment
4 second segment
3a, 4a âmes
3b, 4b garnitures de freinage
6 cylindre de roue hydraulique
7 biellette de rattrapage d'usure
8, 9 ressorts de rappel
10 actionneur mécanique
12 boîtier de l'actionneur
13 alésage de l'actionneur
16 premier élément / premier piston
16.1 tête du deuxième piston
18 deuxième élément
18.1 extrémité longitudinale du deuxième élément
20 deuxième piston
22 moteur électrique
24 roue dentée
26/ 126 moyens de butée
201 spring pack
202 tête du deuxième piston
203 fond du deuxième piston
X, Y axes
e marge d'erreur
j jeu de fabrication
Pb, Pb' position de butée
Pe position estimée
Pf position de freinage
Pr position de relâchement
UC Unité de commande

## Revendications

1. Frein électromécanique comportant :
au moins un organe de friction (3, 4) destiné à venir en contact avec une pièce de frottement solidaire en rotation de la roue, et
au moins un actionneur (10, 110) configuré pour appliquer ledit organe de friction (3, 4) contre ladite pièce de frottement, et
un moteur électrique (22) configuré pour activer ledit actionneur (10, 110),
ledit actionneur (10, 110) comportant au moins un élément mobile (18, 303) lors de l'activation de l'actionneur (10, 110), ledit élément mobile (18, 303) étant mobile entre une position de freinage (Pf), dans laquelle l'organe de friction (3, 4) est en contact avec la pièce de frottement, et une position (Pb) au-delà d'une position de relâchement (Pr), dans laquelle ledit organe de friction n'est plus en contact avec la pièce de frottement,
ledit actionneur (10, 110) comportant des moyens de butée (26, 126) disposés uniquement dans l'actionneur (10, 110) et de sorte que ledit élément mobile (18, 303) soit en appui contre lesdits moyens de butée (26, 126), lorsqu'il prend une position au-delà de la position de relâchement (Pr), et en ce que le moteur électrique est commandé, en phase de desserrage des freins, pour activer l'actionneur jusqu'à ce que l'élément mobile (18) soit en appui contre les moyens de butée (26, 126), le frein étant un frein à tambour comportant un tambour, un plateau (2), deux segments de frein (3, 4),
**caractérisé en ce que** l'actionneur comporte un ensemble vis-écrou et deux pistons, chacun destiné à être en appui contre un segment de frein.

2. Frein électromécanique selon la revendication 1 comportant une unité de commande (UC) comportant des moyens de commande de l'alimentation du moteur électrique (22) et des moyens pour mesurer la consommation électrique du moteur électrique (22), lesdits moyens de commande étant configurés pour arrêter l'alimentation du moteur électrique (22), lorsque la consommation électrique dépasse une valeur donnée.

3. Frein électromécanique selon la revendication 1 ou 2, dans lequel l'actionneur (10, 110) est configuré pour appliquer au moins un freinage de parking et dans lequel le frein comporte un deuxième actionneur (6) pour appliquer un freinage de service.

4. Frein électromécanique selon l'une quelconque des revendications précédentes, dans lequel ledit écrou forme ledit élément mobile (18) et dans lequel ladite vis comporte une tête et un tige munie d'un pas de vis, ladite tête formant un piston en appui contre un des segments de frein, et dans lequel les moyens de butée comportent une dent (126) en saillie dudit filetage disposée de sorte à venir en contact avec l'écrou lorsqu'il prend une position au-delà de la position de relâchement.

5. Frein électromécanique selon l'une quelconque des revendications précédentes, dans lequel l'actionneur (10) comporte un corps (12), des moyens déformables élastiquement et aptes à stocker de l'énergie lors de l'application de l'activation de l'actionneur, au moins une partie desdits moyens déformables formant l'élément mobile, et dans lequel le corps (12) comporte les moyens de butée (26).

6. Procédé de fabrication d'un frein électromécanique selon l'une quelconque des revendications précédentes, comportant :
a) détermination de la position de le au moins élément mobile (18, 303) au-delà de laquelle le frein est relâchée,
b) détermination de la position des moyens de butée (26, 126) par rapport à ladite position de relâchement (Pr) de sorte que les moyens de butée (265, 126) soient distants de la position de relâchement (Pr) d'au moins un jeu de fabrication (j) associé audit procédé,
c) réalisation des moyens de butée (26, 126) dans l'actionneur à la position déterminée à l'étape b),
d) assemblage de l'actionneur et de l'organe de friction.

## Patentansprüche

1. Elektromechanische Bremse, die Folgendes umfasst:
mindestens ein Friktionselement (3, 4), das dazu bestimmt ist, mit einem Reibungsbauteil, das drehbar mit dem Rad verbunden ist, in Kontakt zu kommen, und
mindestens ein Stellglied (10, 110), das dazu konfiguriert ist, das Friktionselement (3, 4) gegen das Reibungsbauteil anzulegen, und
einen Elektromotor (22), der dazu konfiguriert ist, das Stellglied (10, 110) zu aktivieren,
wobei das Stellglied (10, 110) bei Aktivierung des Stellglieds (10, 110) mindestens ein bewegliches Element (18, 303) umfasst, wobei das bewegliche Element (18, 303) zwischen einer Bremsposition (Pf), in der das Friktionselement (3, 4) in Kontakt mit dem Reibungsbauteil steht, und einer Position (Pb) jenseits einer Freigabeposition (Pr), in der sich das Friktionselement nicht mehr in Kontakt mit dem Reibungsbauteil befindet, beweglich ist,
wobei das Stellglied (10, 110) Anschlagmittel (26, 126) umfasst, die nur im Stellglied (10, 110) angeordnet und derart sind, dass das bewegliche Element (18, 303) an den Anschlagmitteln (26, 126) anliegt, wenn es eine Position jenseits der Freigabeposition (Pr) einnimmt, und dadurch, dass der Elektromotor in der Phase des Lösens der Bremsen angesteuert wird, das Stellglied zu aktivieren, bis das bewegliche Element (18) an den Anschlagmitteln (26, 126) anliegt, wobei die Bremse eine Trommelbremse ist, die eine Trommel, eine Trägerplatte (2) und zwei Bremsbacken (3, 4) umfasst,
**dadurch gekennzeichnet, dass** das Stellglied eine Schrauben-MutterAnordnung und zwei Kolben umfasst, von denen jeder dazu bestimmt ist, an einer Bremsbacke anzuliegen.

2. Elektromechanische Bremse nach Anspruch 1, die eine Steuereinheit (UC) umfasst, die Mittel zum Steuern der Stromversorgung des Elektromotors (22) und Mittel zum Messen des Stromverbrauchs des Elektromotors (22) umfasst, wobei die Steuermittel dazu konfiguriert sind, die Stromversorgung des Elektromotors (22) zu stoppen, wenn der Stromverbrauch einen bestimmten Wert überschreitet.

3. Elektromechanische Bremse nach Anspruch 1 oder 2, wobei das Stellglied (10, 110) dazu konfiguriert ist, mindestens eine Feststellbremsung anzulegen, und wobei die Bremse ein zweites Stellglied (6) zum Anlegen einer Betriebsbremsung umfasst.

4. Elektromechanische Bremse nach einem der vorhergehenden Ansprüche, wobei die Mutter das bewegliche Element (18) bildet und wobei die Schraube einen Kopf und eine mit einem Schraubgewinde versehene Stange umfasst, wobei der Kopf einen Kolben bildet, der gegen eine der Bremsbacken anliegt, und wobei die Anschlagmittel einen Zahn (126) umfassen, der aus dem Gewinde hervorsteht und derart angeordnet ist, dass er mit der Mutter in Kontakt gelangt, wenn diese eine Position jenseits der Freigabeposition einnimmt.

5. Elektromechanische Bremse nach einem der vorhergehenden Ansprüche, wobei das Stellglied (10) einen Körper (12) und elastisch verformbare Mittel umfasst, die dazu ausgelegt sind, bei Aktivierung des Stellglieds Energie zu speichern, wobei mindestens ein Teil der verformbaren Mittel das bewegliche Element bildet, und wobei der Körper (12) die Anschlagmittel (26) umfasst.

6. Verfahren zum Herstellen einer elektromechanischen Bremse nach einem der vorhergehenden Ansprüche, das Folgendes umfasst:
a) Bestimmen der Position des mindestens einen beweglichen Elements (18, 303), jenseits welcher die Bremse freigegeben wird,
b) Bestimmen der Position der Anschlagmittel (26, 126) im Verhältnis zur Freigabeposition (Pr), so dass die Anschlagmittel (265, 126) von der Freigabeposition (Pr) um mindestens ein mit dem Verfahren verbundenes Herstellungsspiel (j) beabstandet sind,
c) Umsetzen der Anschlagmittel (26, 126) im Stellglied in der in Schritt b) bestimmten Position,
d) Zusammenbauen des Stellglieds und des Friktionselements.

## Claims

1. An electromechanical brake including :
at least one frictional member (3, 4) for contacting a friction part rotatably integral with the wheel and
at least one actuator (10, 110) configured to apply said frictional member (3, 4) against said friction part, and
an electric motor (22) configured to activate said actuator (10, 110),
said actuator (10, 110) including at least one movable element (18, 303) upon activating the actuator (10, 110), said movable element (18, 303) being movable between a braking position (Pf), in which the frictional member (3, 4) is in contact with the friction part, and a position (Pb) beyond a release position (Pr), in which said frictional member is no longer in contact with the friction part,
said actuator (10, 110) including stop means (26, 126) arranged only in the actuator (10, 110) and such that said movable element (18, 303) bears against said stop means (26, 126), when it assumes a position beyond the release position (Pr), and in that the electric motor is controlled, in the brake release phase, to activate the actuator until the movable element (18) bears against the stop means (26, 126), the brake being a drum brake including a drum, a backing plate (2), two brake shoes (3, 4),
**characterized in that** the actuator includes a screw-nut assembly and two pistons, each for bearing against a brake shoe.

2. The electromechanical brake according to claim 1, including a control unit (UC) including means for controlling power supply to the electric motor (22) and means for measuring electric consumption of the electric motor (22), said control means being configured to stop power supply to the electric motor (22), when the electric consumption exceeds a given value.

3. The electromechanical brake according to claim 1 or 2, wherein the actuator (10, 110) is configured to apply at least parking braking and wherein the brake includes a second actuator (6) for applying service braking.

4. The electromechanical brake according to any preceding claim, wherein said nut forms said movable element (18) and wherein said screw comprises a head and a rod provided with a screw pitch, said head forming a piston bearing against one of the brake shoes, and wherein the stop means include a tooth (126) protruding from said thread arranged to contact the nut when it assumes a position beyond the release position.

5. The electromechanical brake according to any preceding claim, wherein the actuator (10) includes a body (12), elastically deformable means able to store energy upon applying activation of the actuator, at least part of said deformable means forming the movable element, and wherein the body (12) includes the stop means (26).

6. A method for manufacturing an electromechanical brake according to one of the preceding claims, including:
a) determining the position of the at least one movable element (18, 303) beyond which the brake is released,
b) determining the position of the stop means (26, 126) relative to said release position (Pr) such that the stop means (265, 126) are spaced from the release position (Pr) by at least one manufacturing clearance (j) associated with said method,
c) making the stop means (26, 126) in the actuator in the position determined in step b),
d) assembling the actuator and the frictional member.
